# EUROPEAN PATENT SPECIFICATION

(11) **EP 2 925 540 B1**
(45) Date of publication and mention of the grant of the patent: **16.11.2016**
(21) Application number: 13824367.0
(22) Date of filing: 29.11.2013
(51) Int. Cl.: B60C 1/00, C08K 5/17, C09J 121/02

(54) **WATER-BASED ADHESIVE COMPOUND**
WÄSSRIGE KLEBSTOFFZUSAMMENSETZUNG
COMPOSÉ ADHÉSIF À BASE D'EAU

(30) Priority: 30.11.2012 IT RM20120606
(43) Date of publication of application: 07.10.2015
(73) Proprietor: Bridgestone Corporation, Tokyo 104-8340 (JP)
(72) Inventor: COTUGNO, Salvatore, I-00131 Roma (IT); DE LUCA, Francesco, 00040 Pomezia (IT)
(74) Representative: Marchetti, Alessio
(86) International application number: PCT/IB2013/060523
(87) International publication number: WO 2014/083548

(56) References cited:
- WO-A2-2009/071562
- US-A- 5 075 415
- US-B1- 8 247 490
- CHOI D J: "Synthetic rubber-based cement composition for tires that has good adhesive power and improves external appearance quality", WPI / THOMSON,, vol. 2008, no. 6, 18 January 2007 (2007-01-18), XP002707326,

## Description

### TECHNICAL FIELD

The present invention relates to a water-based adhesive compound for producing tyres.

### BACKGROUND ART

The adhesive compounds, or so-called cements, used in tyre manufacturing are normally organic solvent-based. Adhesive compounds of this sort are highly adhesive and very easy to use, mainly due to rubber dissolving easily in the organic compounds and so combining with other rubber to form practically one piece once the organic solvent evaporates.

For ecological reasons, recent European directives have drastically reduced the use of organic solvents in the tyre industry, thus forcing manufacturers to look for alternative ways of ensuring the necessary adhesion of rubber layers.

One solution researched into for some time now is water-based adhesive compounds.

For this solution to be feasible, however, the problem of dispersion and stability of the compound ingredients in the water solvent must be addressed.

As regards dispersion of the compound ingredients in water, the Applicant has discovered a class of emulsifiers capable of dispersing a wide range of ingredients in water, thus eliminating the problem of employing different types of emulsifiers to disperse different ingredients. In fact, tests show that using different types of emulsifiers may even impair adhesion of the compound. The universally effective emulsifiers referred to above are described and claimed in the Applicant's Patent Application WO2009/071562.

For a clear understanding of the problem posed by stability of water-based adhesive compounds, it is important to note that, for production purposes, water-based adhesive compounds must be usable with a large percentage of solid material. More specifically, for a given amount of dry compound deposited, the more solid material the water-based compound contains, the faster it dries and fewer applications are required.

As will be clear to anyone skilled in the art, the stability of a water-based compound becomes increasingly critical as the amount of solid material to be kept dispersed increases.

Another important point to bear in mind is the adhesive capacity of the compound at low temperature, to enable tyres to be produced regardless of the climate at the production plant location. At present, many water-based adhesive compounds show a drastic reduction in adhesive capacity even at temperatures below 15°C.

The Applicant has surprisingly discovered a particular class of resins capable of ensuring a high degree of adhesive power, even at low temperatures, as well as a high degree of stability, even with a high percentage of solid material.

### DISCLOSURE OF INVENTION

One object of the present invention is a water-based adhesive compound comprising water as a solvent; a cross-linkable, unsaturated-chain polymer base; an emulsifier of general formula (I); and an adhesive resin; said water-based adhesive compound being characterized in that said adhesive resin is an alkylphenol-formaldehyde resin;

R₁CONR₂CHR₃COOX (I)

where :
R₁ is an aliphatic group C₆-C₂₃
R₂ is H or an aliphatic group C₁-C₈
R₃ is H or an aliphatic or aromatic group C₁-C₈ and
X is a metal cation.

Surfactants of general formula (I) are described in the Applicant's Patent Application WO2009/071562 included herein by way of reference.

The aliphatic group R₁ preferably comprises a double bond.

The emulsifier of general formula (I) is preferably CH₃(CH₂)₉CON(CH₃)CH₂COONa.

The alkyl group of the alkylphenol of the resin is preferably an aliphatic group C₃-C₁₀.

The alkylphenol of the resin is preferably p-phenol-2-pentyl-2,4,4-trimethyl.

The adhesive compound preferably comprises 0.5 to 25 phr of the alkylphenol-formaldehyde resin.

The water-based adhesive compound preferably comprises a solid portion comprising 100 phr of polymer base, 0.5 to 5 phr of the emulsifier of general formula (I), and 0.5 to 25 phr of alkylphenol-formaldehyde resin.

A further object of the present invention is combined use of alkylphenol-formaldehyde resin and an emulsifier of general formula (I) in tyre manufacturing water-based adhesive compounds, which are highly stable, and highly adhesive at low temperatures.

### BEST MODE FOR CARRYING OUT THE INVENTION

The following are purely non-limiting examples for a clearer understanding of the invention.

### EXAMPLES

Four control compounds (A-D) and two compounds in accordance with the invention (E, F) were produced. Compound A is a control solvent-based adhesive compound, and compounds B-D control water-based adhesive compounds. More specifically, none of compounds B-D comprise both a surfactant of general formula (I) and an alkylphenol-formaldehyde resin.

It is important to note that the control water-based adhesive compounds (B-D) have a maximum 33% by weight solid portion, beyond which they lose stability and are unusable.

Compounds E and F are water-based adhesive compounds, in accordance with the present invention, comprising both a surfactant of general formula (I) and an alkylphenol-formaldehyde resin.

Compound F in particular is a preferred embodiment, in that, containing a smaller amount of carbon black, it has major advantages in terms of application. More specifically, as it is applied, the water-based compound may undergo severe shear stress, comparable to severe agitation, which could destabilize dispersion, thus resulting in coagulation phenomena and in the impossibility of applying the compound.

Though Table II shows a 45% by weight solid portion in the adhesive compounds according to the invention (E, F), these nevertheless remain stable even with larger solid portion percentages.

Water-based compounds B-F were produced by dispersing all the ingredients in Tables I and II simultaneously in enough water to form a homogeneous emulsion. The resulting aqueous solution was agitated mechanically for 30 minutes and then sonicated for 15 minutes to obtain an aqueous emulsion.

The above method of producing the aqueous emulsions is in no way to be inferred as limiting the object of the present invention.

Table I shows the compositions of the four control compounds, and the percentages by weight of the solvent (organic or water) and of the solid portion, the composition of which is shown in phr.

**TABLE I**

| | | A | B | C | D |
|---|---|---|---|---|---|
| Solvent weight % | | 30% n-hepta ne | 67% water | 67% water | 67% water |
| Solid portion % | | 70% | 33% | 33% | 33% |
| Composition in phr | Natural rubber | 100 | | | |
| | Emulsifier (a) | -- | 2 | 2 | -- |
| | Emulsifier (b) | -- | -- | -- | 2 |
| | Resin (a) | 20 | -- | -- | -- |
| | Resin (b) | | 20 | | 20 |
| | Resin (c) | -- | -- | 20 | -- |
| | Carbon black | 10 | | | |
| | ZnO | 1 | | | |
| | Sulphur | 1 | | | |
| | TBBS | 1 | | | |

**TABLE II**

| | | E | F |
|---|---|---|---|
| Solvent weight % | | 55% water | 55% water |
| Solid portion % | | 45% | 45% |
| Composition in phr | Natural rubber | 100 | |
| | Emulsifier (b) | 2 | 0.,24 |
| | Resin (c) | 20 | 10 |
| | Carbon black | 10 | 2 |
| | ZnO | 1 | -- |
| | Sulphur | 1 | -- |
| | TBBS | 1 | -- |

Emulsifier (a) is a fatty acid ethoxylate.

Emulsifier (b) is CH₃(CH₂)₉CON(CH₃)CH₂COONa.

Resin (a) is butylphenol-acetylene.

Resin (b) is a C₅-C₉ resin marketed by Eastman as TACOLYN 100.

Resin (c) is an alkylphenol-formaldehyde resin marketed by SI Group as HRJ-16231, and in which the alkylphenol of the resin is p-phenol-2-pentil-2,4,4-trimethyl.

In addition to natural rubber, the adhesive compounds according to the present invention may comprise any cross-linkable, unsaturated-chain polymer base obtained by polymerizing conjugate dienes and/or aliphatic or aromatic vinyl monomers. For example, usable polymer bases are selected from the group comprising natural rubber; 1,4-cis polyisoprene; polybutadiene; isoprene-isobutene copolymers, possibly halogenated; butadiene-acrylonitrile copolymers; styrene-butadiene copolymers and styrene-butadiene-isoprene terpolymers in solution or emulsion; and ethylene-propylene-diene terpolymers. The above polymer bases may be used either singly or mixed together.

### Laboratory testing

A test of adhesion to green rubber at different temperatures, and a 40°C drying test were conducted on each of the compounds produced.

For the adhesion test, the compound was applied to a layer of green rubber and allowed to dry for roughly 1 hour in air at ambient temperature. Adhesion was then measured by applying another layer of green rubber to the compound and measuring the force required to detach it.

The time taken for all the water in a given amount of compound to evaporate was measured by TGA analysis.

For as accurate a comparison as possible, the above laboratory tests were conducted on equal amounts of dry compound.

Compounds B-F were sprayed or spread on.

Table III shows the adhesion and drying test results.

**TABLE III**

| | | A | B | C | D | E | F |
|---|---|---|---|---|---|---|---|
| Adhesion gr | at 25°C | 1800 | 1250 | 1650 | 1400 | 1800 | 2000 |
| | at 10°C | 900 | 150 | 1350 | 200 | 1400 | 1600 |
| Drying (sec*cm²/mg) | | <5.0 | 19.0 | 19.3 | 19.3 | 13.2 | 13.3 |

As shown clearly by the results in Table III, the water-based adhesive compounds according to the invention are more adhesive (at ambient and low temperatures) than both the water-based and solvent-based control compounds. The advantages in terms of adhesion and stability derive from the synergic effect of the surfactant of general formula (I) and the alkylphenol-formaldehyde resin.

In fact, the low-temperature adhesion results of control compound D, comprising the surfactant of general formula (I) but no alkylphenol-formaldehyde resin, are far lower than those of compounds E and F according to the invention.

On the other hand, compound C, comprising alkylphenol-formaldehyde resin but no surfactant of general formula (I), shows good low-temperature adhesion, but has the drawback of losing stability with solid portion percentages of over 33.

## Claims

1. A water-based adhesive compound comprising water as a solvent; a cross-linkable, unsaturated-chain polymer base; an emulsifier of general formula (I); and an adhesive resin; said water-based adhesive compound being **characterized in that** said adhesive resin is an alkylphenol-formaldehyde resin wherein the alkyl group of the alkylphenol is an aliphatic group C₃-C₁₀;
R₁CONR₂CHR₃COOX (I)
were :
R₁ is an aliphatic group C₆-C₂₃
R₂ is H or an aliphatic group C₁-C₈
R₃ is H or an aliphatic or aromatic group C₁-C₈ and
X is a metal cation;
said cross-linkable, unsaturated-chain polymer base being obtained by polymerizing conjugate dienes and/or aliphatic or aromatic vinyl monomers.

2. A water-based adhesive compound as claimed in Claim 1, **characterized in that** the alkylphenol of the resin is p-phenol-2-pentyl-2,4,4-trimethyl.

3. A water-based adhesive compound as claimed in one of the foregoing Claims, **characterized by** comprising 0.5 to 25 phr of the alkylphenol-formaldehyde resin.

4. A water-based adhesive compound as claimed in one of the foregoing Claims, **characterized in that** the emulsifier of general formula (I) is CH₃(CH₂)₉CON(CH₃)CH₂COONa.

5. A water-based adhesive compound as claimed in one of the foregoing Claims, **characterized by** comprising a solid portion comprising 100 phr of polymer base, 0.5 to 5 phr of the emulsifier of general formula (I), and 0.5 to 25 phr of alkylphenol-formaldehyde resin.

6. A water-based adhesive compound as claimed in one of the foregoing Claims, **characterized by** comprising at least 40% by weight of a solid portion.

7. Combined use of alkylphenol-formaldehyde resin and an emulsifier of general formula (I) in a water-based adhesive compound for producing tyres; said compound being highly stable, and highly adhesive at low temperatures;
R₁CONR₂CHR₃COOX (I)
where :
R₁ is an aliphatic group C₆-C₂₃
R₂ is H or an aliphatic group C₁-C₈
R₃ is H or an aliphatic or aromatic group C₁-C₈ and
X is a metal cation;
the alkyl group of the alkylphenol of the resin being an aliphatic group C₃-C₁₀.

8. Combined use of alkylphenol-formaldehyde resin and an emulsifier of general formula (I), as claimed in Claim 7, **characterized in that** the alkylphenol of the resin is p-phenol-2-pentyl-2,4,4-trimethyl.

9. Combined use of alkylphenol-formaldehyde resin and an emulsifier of general formula (I), as claimed in Claims 7 or 8, **characterized in that** the emulsifier of general formula (I) is CH₃(CH₂)₉CON(CH₃)CH₂COONa.

10. Combined use of alkylphenol-formaldehyde resin and an emulsifier of general formula (I), as claimed in one of Claims 7-9, **characterized in that** the compound comprises 0.5 to 5 phr of said emulsifier of general formula (I), and 0.5 to 25 phr of the alkylphenol-formaldehyde resin.

11. Combined use of alkylphenol-formaldehyde resin and an emulsifier of general formula (I), as claimed in one of Claims 7-10, **characterized in that** said compound comprises at least 40% by weight of a solid portion.

## Patentansprüche

1. Haftmittelverbindung auf Wasserbasis, umfassend Wasser als ein Lösemittel; eine vernetzbare ungesättigte Polymerkettenbasis; einen Emulgator der allgemeinen Formel (I); und ein Haftmittelharz; wobei die Haftmittelverbindung auf Wasserbasis **dadurch gekennzeichnet ist, dass** das Haftmittelharz ein Alkylphenol-Formaldehydharz ist, wobei die Alkylgruppe des Alkylphenols eine aliphatische C₃-C₁₀-Gruppe ist;
R₁CONR₂CHR₃COOX (I)
worin :
R₁ eine aliphatische Gruppe C₆-C₂₃ ist
R₂ H oder eine aliphatische C₁-C₈ Gruppe ist
R₃ H oder eine aliphatische oder aromatische C₁-C₈ Gruppe ist und
X ein Metallkation ist;
wobei die vernetzbare, ungesättigte Polymerkettenbasis durch Polymerisation konjugierter Diene und/oder aliphatischer oder aromatischer Vinylmonomere erhalten wird.

2. Haftmittelverbindung auf Wasserbasis nach Anspruch 1, **dadurch gekennzeichnet, dass** das Alkylphenol des Harzes p-Phenol-2-pentyl-2,4,4-trimethyl ist.

3. Haftmittelverbindung auf Wasserbasis nach einem der vorstehenden Ansprüche, **dadurch gekennzeichnet, dass** sie 0,5 bis 25 phr des Alkylphenol-Formaldehydharzes umfasst.

4. Haftmittelverbindung auf Wasserbasis nach einem der vorstehenden Ansprüche, **dadurch gekennzeichnet, dass** der Emulgator von allgemeiner Formel (I) CH₃(CH₂)₉CON(CH₃)CH₂COONa ist.

5. Haftmittelverbindung auf Wasserbasis nach einem der vorstehenden Ansprüche, **gekennzeichnet durch** Umfassen eines festen Anteils, umfassend 100 phr einer Polymerbasis, 0,5 bis 5 phr des Emulgators von allgemeiner Formel (I) und 0,5 bis 25 phr von Alkylphenol-Formaldehydharz.

6. Haftmittelverbindung auf Wasserbasis nach einem der vorstehenden Ansprüche, **gekennzeichnet durch** Umfassen von mindestens 40 Gew.-% eines festen Anteils.

7. Kombinierte Verwendung von Alkylphenol-Formaldehydharz und eines Emulgators der allgemeinen Formel (I) in einer Haftmittelverbindung auf Wasserbasis zum Produzieren von Reifen; wobei die Verbindung bei niedrigen Temperaturen hochstabil und stark haftend ist;
R₁CONR₂CHR₃COOX (I)
worin :
R₁ eine aliphatische Gruppe C₆-C₂₃ ist
R₂ H oder eine aliphatische C₁-C₈ Gruppe ist
R₃ H oder eine aliphatische oder aromatische C₁-C₈ Gruppe ist und
X ein Metallkation ist;
die Alkylgruppe des Alkylphenols des Harzes eine aliphatische C₃-C₁₀-Gruppe ist.

8. Kombinierte Verwendung von Alkylphenol-Formaldehydharz und eines Emulgators der allgemeinen Formel (I) nach Anspruch 7, **dadurch gekennzeichnet, dass** das Alkylphenol des Harzes p-Phenol-2-pentyl-2,4,4-trimethyl ist.

9. Kombinierte Verwendung von Alkylphenol-Formaldehydharz und eines Emulgators der allgemeinen Formel (I) nach Ansprüchen 7 oder 8, **dadurch gekennzeichnet, dass** der Emulgator von allgemeiner Formel (I) CH₃(CH₂)₉CON(CH₃)CH₂COONa ist.

10. Kombinierte Verwendung von Alkylphenol-Formaldehydharz und eines Emulgators der allgemeinen Formel (I) nach einem der Ansprüche 7-9, **dadurch gekennzeichnet, dass** die Verbindung 0,5 bis 5 phr des Emulgators der allgemeinen Formel (I) und 0,5 bis 25 phr des Alkylphenol-Formaldehydharzes umfasst.

11. Kombinierte Verwendung von Alkylphenol-Formaldehydharz und eines Emulgators der allgemeinen Formel (I) nach einem der Ansprüche 7-10, **dadurch gekennzeichnet, dass** die Verbindung mindestens 40 Gew.-% eines festen Anteils umfasst.

## Revendications

1. Composé adhésif à base d'eau comprenant de l'eau en tant que solvant ; une base polymère réticulable à chaîne insaturée ; un émulsifiant de formule générale (I) ; et une résine adhésive ; ledit composé adhésif à base d'eau étant **caractérisé en ce que** ladite résine adhésive est une résine d'alkylphénol-formaldéhyde dans lequel le groupe alkyle de l'alkylphénol est un groupe aliphatique de C₃ à C₁₀ ;
R₁CONR₂CHR₃COOX (I)
où :
R₁ est un groupe aliphatique de C₆ à C₂₃
R₂ est H ou un groupe aliphatique de C₁ à C₈
R₃ est H ou un groupe aliphatique ou aromatique de C₁ à C₈ et
X est un cation métallique ;
ladite base polymère réticulable à chaîne insaturée étant obtenue par polymérisation de diènes conjugués et/ou de monomères vinyliques aliphatiques ou aromatiques.

2. Composé adhésif à base d'eau selon la revendication 1, **caractérisé en ce que** l'alkylphénol de la résine est le p-phénol-2-pentyl-2,4,4-triméthyle.

3. Composé adhésif à base d'eau selon l'une des revendications qui précèdent, **caractérisé en ce qu'**il comprend 0,5 à 25 phr de résine de la résine d'alkylphénol-formaldéhyde.

4. Composé adhésif à base d'eau selon l'une des revendications qui précèdent, **caractérisé en ce que** l'émulsifiant de formule générale (I) est CH₃(CH₂)₉CON(CH₃)CH₂COONa.

5. Composé adhésif à base d'eau selon l'une des revendications qui précèdent, **caractérisé en ce qu'**il comprend une partie solide comprenant 100 phr de résine de base polymère, 0,5 à 5 phr de résine de l'émulsifiant de formule générale (I), et 0,5 à 25 phr de résine de résine d'alkylphénol-formaldéhyde.

6. Composé adhésif à base d'eau selon l'une des revendications qui précèdent, **caractérisé en ce qu'**il comprend au moins 40% en poids d'une partie solide.

7. Utilisation combinée de résine d'alkylphénol-formaldéhyde et d'un émulsifiant de formule générale (I) dans un composé adhésif à base d'eau pour la production de pneumatiques ; ledit composé étant très stable, et fortement adhésif à basses températures ;
R₁CONR₂CHR₃COOX (I)
où :
R₁ est un groupe aliphatique de C₆ à C₂₃
R₂ est H ou un groupe aliphatique de C₁ à C₈
R₃ est H ou un groupe aliphatique ou aromatique de C₁ à C₈ et
X est un cation métallique ;
le groupe alkyle de l'alkylphénol de la résine étant un groupe aliphatique de C₃ à C₁₀.

8. Utilisation combinée de résine d'alkylphénol-formaldéhyde et d'un émulsifiant de formule générale (I), selon la revendication 7, **caractérisée en ce que** l'alkylphénol de la résine est le p-phénol-2-pentyl-2,4,4-triméthyle.

9. Utilisation combinée de résine d'alkylphénol-formaldéhyde et d'un émulsifiant de formule générale (I), selon les revendications 7 ou 8, **caractérisée en ce que** l'émulsifiant de formule générale (I) est CH₃(CH₂)₉CON(CH₃)CH₂COONa.

10. Utilisation combinée de résine d'alkylphénol-formaldéhyde et d'un émulsifiant de formule générale (I), selon l'une quelconque des revendications 7 à 9, **caractérisée en ce que** le composé comprend 0,5 à 5 phr de résine dudit émulsifiant de formule générale (I), et 0,5 à 25 phr de résine de la résine d'alkylphénol-formaldéhyde.

11. Utilisation combinée de résine d'alkylphénol-formaldéhyde et d'un émulsifiant de formule générale (I), selon l'une quelconque des revendications 7 à 10, **caractérisée en ce que** ledit composé comprend au moins 40% en poids d'une partie solide.
